# EUROPEAN PATENT SPECIFICATION

(11) **EP 2 503 841 B1**
(45) Date of publication and mention of the grant of the patent: **04.05.2016**
(21) Application number: 12160538.0
(22) Date of filing: 21.03.2012
(51) Int. Cl.: H05B 3/00, B29C 35/08, B29B 13/02

(54) **Heater for thermoforming covering sheets**
Heizvorrichtung zur Thermoformung von Abdeckfolien
Élément chauffant pour le thermoformage de feuilles de couverture

(30) Priority: 21.03.2011 ES 201100316
(43) Date of publication of application: 26.09.2012
(73) Proprietor: BARBERAN LATORRE, Jesus Francisco, 08860 Castelldefels Barcelona (ES)
(72) Inventor: BARBERAN LATORRE, Jesus Francisco, 08860 Castelldefels Barcelona (ES)
(74) Representative: Intès, Didier Gérard André

(56) References cited:
- EP-A1- 1 098 153
- EP-A2- 1 593 919
- WO-A1-2006/067499
- DE-A1- 10 126 019
- US-A- 3 607 533
- US-A- 3 888 613

## Description

### Technical Field

The present invention relates to making panels comprising a base board, for example chipboard, MDF or similar materials, on which an aesthetic covering with an outer sheet is arranged, proposing a heater which allows effectively and practically heating the bending areas of the covering sheet on the edges of the base board in order to achieve a defect-free fixing.

### State of the Art

The use of panels formed by chipboard, MDF or a similar economical material with an outer covering formed by an aesthetic sheet applied on the mentioned base board is common in applications such as countertops and furniture panels, since panels with any desired finish, from a uniform solid colour, to imitations of various materials such as marble or wood, are obtained in that manner.

The aesthetic covering sheet is conventionally applied by means of gluing it on the base board, said sheet being able to be arranged abutting with edging strips which are fixed on the edges of the base board or by bending the same sheet for fitting it on the edges.

In the case of covering the faces of the base board with sheet and independent strips on the edges, it results in a visible line in the attachment of both elements of the covering, detrimental to the aesthetics, and furthermore, in the case of countertops, moisture can also get in, deteriorating the inner base board of the panel.

Those drawbacks of the above solution are avoided with coverings by means of a sheet which is fitted by being bending it on the edges, but when bending the covering sheet on the edges of the panel for fitting it on the edges, creasing defects tend to appear in the sheet because it becomes detached in those bending areas on the edges.

Heaters for thermoforming covering sheets are known to the skilled person, for instance from US patents US 3,888,613 and US 3,607,533.

### Subject of the Invention

According to the present invention a heater for thermoforming the covering sheets of panels is proposed, whereby the bending areas of the covering sheets can be heated effectively and precisely to avoid the occurrence of defects when applying the sheet.

This heater, subject of the invention, comprises an elongated body forming a longitudinal gap in which a heat radiation lamp is arranged for projecting heating through a slit through which said housing gap for housing the lamp is longitudinally open.

The body of the heater comprises two symmetrical side profiles in which a cooling circuit is incorporated forming the housing gap for housing the heat radiation lamp between both profiles, whereas said profiles are attached by practicable regulator crosspieces which allow moving the profiles closer to or away from each other to form the heat radiation projection slit with the desired width depending on the area of the sheet of application to be heated.

Therefore, in the use of application of the heater the radiation lamp emits a heat projection which is channelled, through the projection slit, in a controlled manner by adjusting the width of said projection slit and by controlling the intensity of the radiation lamp, allowing to heat a perfectly defined band of the sheet of application to soften the sheet in said section allowing its perfect fitting and gluing on the edges of a base board of application without the surface characteristics of the covering formed by the sheet being affected.

Said heater, subject of the invention, therefore has truly advantageous features, acquiring its own identity and preferred character for thermoforming covering sheets when being bent on edges of panels of application.

### Description of the Drawings

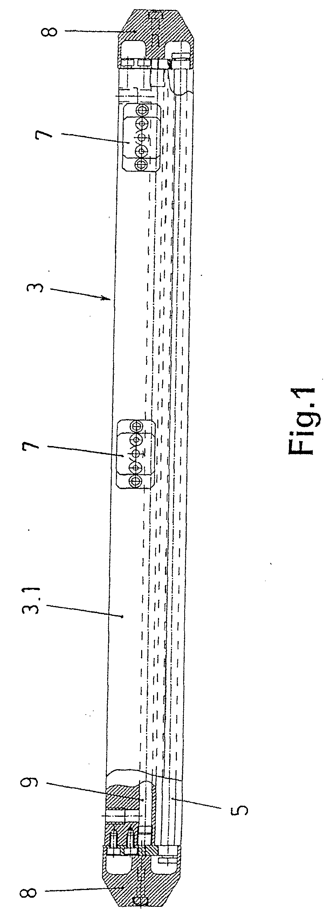

Figure 1 shows a longitudinal section of the proposed heater.

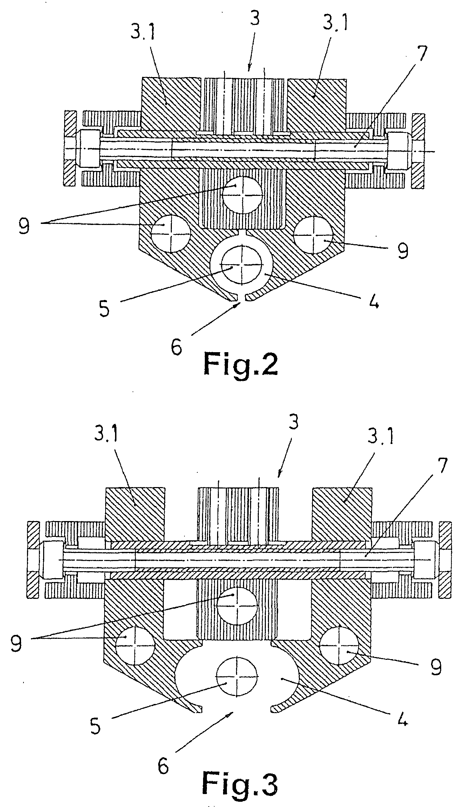

Figures 2 and 3 show respective cross-sections of the proposed heater in two different open positions of the heat emission projection slit.
Figures 4 and 5 show respective views of the heater in two phases of the process of bending the covering sheet on an edge when applied.

### Detailed Description of the Invention

The invention relates to a heater for thermoforming covering sheets (1) of base boards (2) in making aesthetic panels, with embodiment features which allow bending the sheet (1) when on edges without covering defects occurring in the angular areas of the application.

The heater comprises an elongated body (3) formed by two symmetrical side profiles (3.1), between which a longitudinal gap (4) is formed in which a heat radiation lamp (5) is housed, the gap (4) being longitudinally open through a slit (6) through which the heat radiation of the lamp (5) is projected outwardly.

The side profiles (3.1) are attached by practicable regulator crosspieces (7) by means of which the mentioned side profiles (3.1) can be moved closer to and away from each other, thus allowing to vary the width of the slit (6) for adjusting the heat radiation projection of the lamp (5) outwardly.

The elongated body (3) is closed at the ends with covers (8) in which the connections of the lamp (5) are established; while along said body (3) there are defined conduits (9) though which a liquid flows, forming a cooling circuit, so that the heat from the radiation lamp (5) does not considerably raise the temperature of said elongated body (3), but so that the heat is only projected outwardly.

This being done, the heater allows adjusting the heat radiation projection of the lamp (5) by means of controlling the intensity of the lamp (5) itself, and it further allows adjusting the concentration of the heat radiation projection outwardly by means of forming the width of the projection slit (6) by moving the side profiles (3.1) to the precise distance with respect to one another.

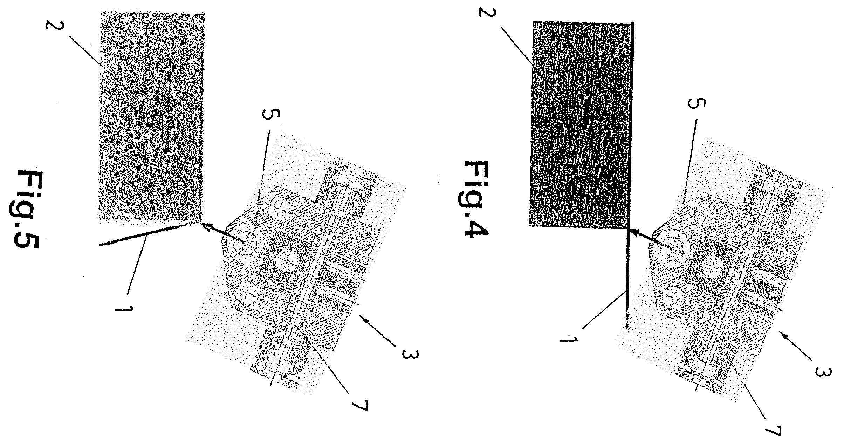

The heater thus allows effectively heating the bending areas of the covering sheets (1) when applied on angular edges of the corresponding base boards (2) to be covered, as seen in Figures 4 and 5, to soften the sheet (1) in those bending areas for the purpose of perfectly fitting and fixing it on the edges which to be covered so that the covering is defect-free.

## Claims

1. A heater for thermoforming covering sheets for fitting covering sheets (1) on edges of base boards (2) to be covered in making aesthetic panels, **characterised in that** it comprises an elongated body (3) formed by two symmetrical side profiles (3.1), between which a longitudinal gap (4) is formed in which a heat radiation lamp (5) is housed, said gap (4) being longitudinally open through a slit (6) through which the heat radiation of the lamp (5) is projected outwardly, while the side profiles (3.1) are attached by practicable regulator crosspieces (7) by means of which said side profiles (3.1) can be moved closer to or away from each other for adjusting the width of the mentioned projection slit (6) for projecting the heat radiation outwardly.

2. The heater for thermoforming covering sheets according to claim 1, **characterised in that** the elongated body (3) is closed at the ends with covers (8) in which the connection of the heat radiation lamp (5) is established.

3. The heater for thermoforming covering sheets according to claim 1 or 2, **characterised in that** there are defined along the elongated body (3) conduits (9) through which a liquid or gas flows, forming a cooling system.

## Patentansprüche

1. Heizvorrichtung zum Thermoformen von Deckfolien für das Anbringen von Deckfolien (1) auf Kanten von Grundplatten (2), die bei der Herstellung von dekorativen Paneelen bedeckt werden sollen, **dadurch gekennzeichnet, dass** sie einen langgestreckten Körper (3) umfasst, der durch zwei symmetrische Seitenprofile (3.1) gebildet ist, zwischen denen ein Längsspalt (4) ausgebildet ist, in dem sich eine Wärmestrahlungslampe (5) befindet, wobei der Spalt (4) in der Längsrichtung durch einen Schlitz (6) geöffnet ist, durch den die Wärmestrahlung der Lampe (5) nach außen abgegeben wird, während die Seitenprofile (3.1) mittels zweckmäßiger Regler-Querstücke (7) befestigt sind, durch die die Seitenprofile (3.1) näher zueinander hin oder weiter voneinander weg bewegt werden können, um die Breite des genannten Abgabeschlitzes (6) zum Abgeben der Wärmestrahlung nach außen anzupassen.

2. Heizvorrichtung zum Thermoformen von Deckfolien nach Anspruch 1, **dadurch gekennzeichnet, dass** der langgestreckte Körper (3) an seinen Enden mit Abdeckungen (8) verschlossen ist, in denen die Verbindung der Wärmestrahlungslampe (5) eingerichtet ist.

3. Heizvorrichtung zum Thermoformen von Deckfolien nach Anspruch 1 oder 2, **dadurch gekennzeichnet, dass** entlang des langgestreckten Körpers (3) Leitungen (9), durch die eine Flüssigkeit oder ein Gas fließt, festgelegt sind, welche ein Kühlsystem bilden.

## Revendications

1. Elément chauffant pour thermoformer des feuilles de couverture destinées pour placer les feuilles de couverture (1) sur des bords de planches de base (2) destinées à être recouvertes pour réaliser des panneaux esthétiques, **caractérisé en ce qu'**il comprend un corps allongé (3) formé par deux profilés latéraux symétriques (3.1) entre lesquels un espace longitudinal (4) est formé, dans lequel une lampe de rayonnement de chaleur (5) est logée, ledit espace (4) étant ouvert longitudinalement par le biais d'une fente (6) à travers laquelle le rayonnement de chaleur de la lampe (5) est projeté vers l'extérieur, alors que les profilés latéraux (3.1) sont fixés par des traverses de régulateur réalisables (7) au moyen desquelles lesdits profilés latéraux (3.1) peuvent se rapprocher ou s'éloigner pour ajuster la largeur de la fente de projection (6) mentionnée afin de projeter le rayonnement de chaleur vers l'extérieur.

2. Elément chauffant pour thermoformer des feuilles de couverture selon la revendication 1, **caractérisé en ce que** le corps allongé (3) est fermé aux extrémités avec des couvercles (8) dans lesquels le raccordement de la lampe de rayonnement de chaleur (5) est établi.

3. Elément chauffant pour thermoformer des feuilles de couverture selon la revendication 1 ou 2, **caractérisé en ce que** l'on définit, le long du corps allongé (3), des conduits (9) à travers lesquels un liquide ou un gaz s'écoule, formant un système de refroidissement.
